Europäisches Patentamt

European Patent Office

Office européen des brevets

(11) Numéro de publication: **0 017 583**
**B1**

(12) **FASCICULE DE BREVET EUROPEEN**

(45) Date de publication du fascicule du brevet: **31.07.85**

(21) Numéro de dépôt: **80400438.0**

(22) Date de dépôt: **02.04.80**

(51) Int. Cl.⁴: **F 16 K 1/22**

(54) **Vanne-papillon de précision.**

(30) Priorité: **10.04.79 FR 7909033**

(43) Date de publication de la demande:
**15.10.80 Bulletin 80/21**

(45) Mention de la délivrance du brevet:
**31.07.85 Bulletin 85/31**

(84) Etats contractants désignés:
**AT BE CH DE GB IT LI NL**

(56) Documents cités:
**FR-A-2 038 438**
**GB-A-1 167 375**
**GB-A-1 297 623**
**US-A-3 081 791**

(73) Titulaire: **OMNIBREV HOLDING AG**
**Hofstrasse 1, Postfach 144**
**CH-6301 Zug (CH)**

(72) Inventeur: **Gachot, Jean**
**26 bis, avenue de Paris**
**F-95230 Soisy sous Montmorency (FR)**

(74) Mandataire: **Bouju, André et al**
**38 Avenue de la Grande Armée**
**F-75017 Paris (FR)**

Courier Press, Leamington Spa, England.

## Description

La présente invention concerne une vanne papillon comprenant un corps traversé par un conduit destiné à venir en regard de deux parties de la tuyauterie, et un disque obturateur—ou papillon—monté rotativement dans le corps selon un axe de rotation qui coupe perpendiculairement l'axe du conduit, cet obturateur comprenant en outre, sur sa face tournée vers l'axe de rotation, au moins une oreille qui est traversée par un alésage coaxial à l'axe de rotation et occupé par un arbre assurant la rotation de l'obturateur et présente vers la paroi du conduit une surface sphérique de diamètre voisin de celui du conduit et centrée à l'intersection entre l'axe de rotation de l'obturateur et l'axe de conduit.

Une telle vanne est connue d'après les figures 8 à 13 du GB—A—1 297 623. Selon ce document, le conduit est renflé sphériquement au niveau de l'arbre et la surface sphérique de l'oreille a même rayon que le renflement et coopère de façon glissante avec ce dernier. Ainsi, la pression du fluide qui s'exerce sur l'obturateur est transmise des oreilles directement au corps de vanne sans passer par l'arbre. Celui-ci ne subit donc pas de flexion.

Ce résultat n'est cependant obtenu qu'au prix d'inconvénients majeurs. En particulier, la fabrication des surfaces sphériques doit être très précise. Le moindre jeu entre elles permettrait à l'arbre une flexion importante. Cette flexion ne serait pas empêchée par le montage de l'arbre dans le corps car ledit montage présente nécessairement un certain jeu pour éviter la surabondance des guidages: en effet, s'il n'y avait pas de jeu entre l'arbre et son alésage, les risques de coincement seraient très importants dans le cas où il n'y aurait pas non plus de jeu entre les surfaces sphériques.

En définitive, si l'on désirait utiliser cette structure connue pour réaliser une vanne de précision résistant aux hautes pressions, on s'exposerait à un coût très élevé sans qu'un bon résultat puisse être garanti.

Le but de l'invention est ainsi de proposer une vanne papillon dans laquelle la flexion dans l'arbre est réduite de façon fiable pour assurer à la vanne une bonne précision, notamment sous les hautes pressions, et ce à un coût raisonnable.

Suivant l'invention, la vanne papillon est caractérisée en ce que le disque obturateur est déporté parallèlement par rapport à son axe de rotation et comporte à sa périphérie une portée annulaire destinée à prendre appui sur un siège faisant saillie dans le conduit qui est sensiblement cylindrique.

Ainsi, la surface sphérique des oreilles pivote au voisinage de la paroi sensiblement cylindrique du conduit. La surface sphérique peut être très proche de la surface cylindrique sans risquer de heurter ladite surface cylindrique. Ainsi, la flexion dans l'arbre est réduite par réduction du bras de levier entre le point où les oreilles transmettent l'effort à l'arbre et le point à partir duquel l'arbre est soutenu dans le corps de vanne. Mais le conduit n'a plus un rôle de guidage des oreilles et par conséquent la fabrication de la surface sphérique n'est pas nécessairement précise.

On connaît certes d'après le FR—A—2 039 438 une vanne papillon comportant les éléments de la partie caractérisante de la revendication 1. Cependant, selon ce document, la face des oreilles tournée vers le conduit est plane et a dû être disposée à l'écart de la paroi du conduit. Il y a donc entre le conduit et l'oreille associée à l'arbre de commande une distance libre constituant un bras de levier pour les efforts sollicitant l'arbre en flexion. En faisant coopérer la surface sphérique de l'oreille avec la face cylindrique du conduit, l'invention permet précisément de supprimer ce bras de levier.

D'autres particularités et avantages de l'invention ressortiront encore de la description ci-après.

Aus dessins annexés, donnés à titre d'exemples non limitatifs:

— la figure 1 est une vue en coupe axiale selon un plan parallèle à la direction de l'écoulement, d'une vannepapillon conforme à l'invention, l'obturateur étant en position de fermeture;
— la figure 2 est une vue en coupe selon un plan transversal à la direction de l'écoulement, de la vannepapillon précédente, l'obturateur étant en position d'ouverture;
— la figure 3 est une vue en perspective de l'obturateur.

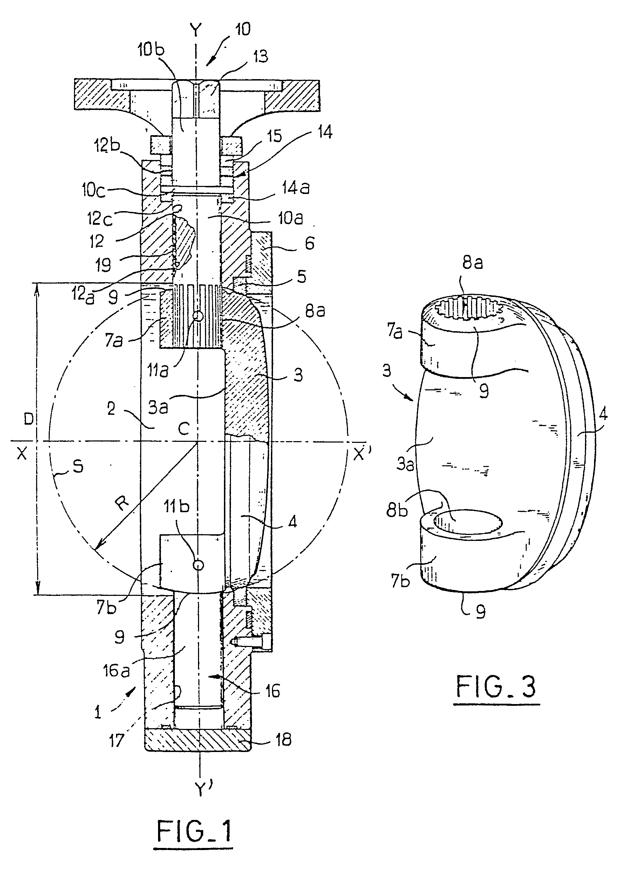

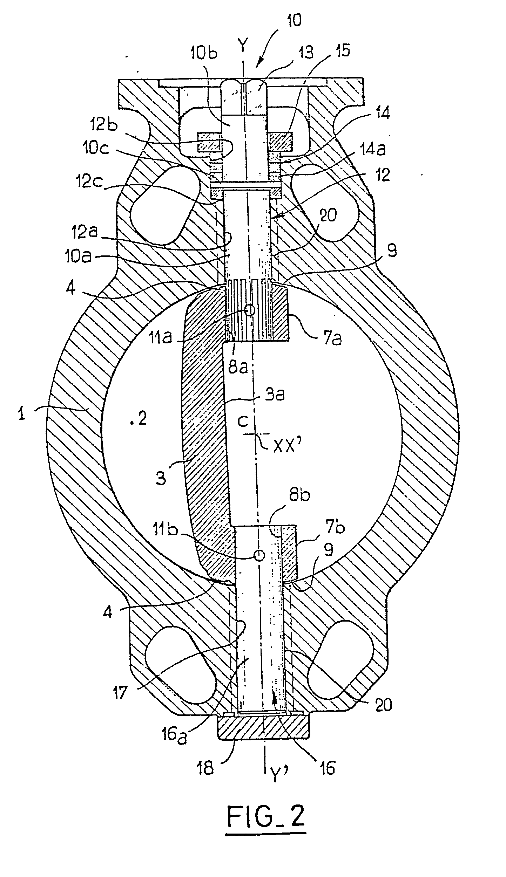

Dans la réalisation des figures 1 et 2, la vannepapillon comprend un corps 1 traversé par un conduit 2 sensiblement cylindrique d'axe XX', et un disque obturateur 3—ou papillon—monté en rotation dans le conduit 2 autour d'un axe YY' perpendiculaire à l'axe XX'.

L'obturateur 3 comporte, sur sa périphérie, une portée annulaire 4 constituée par une zone sphérique centrée à l'intersection C des axes XX' et YY'.

Cet obturateur 3 est déporté latéralement par rapport à son axe de rotation YY' et peut prendre une position de fermeture (figure 1) dans laquelle il est transversal au conduit 2, sa portée 4 reposant alors sur un siège 5 maintenu en saillie dans le conduit 2 par la bague d'appui 6, et une position d'ouverture (figure 2) dans laquelle cet obturateur 3 est sensiblement parallèle au plan formé par les axes XX' et YY'.

Sur sa face 3a tournée vers son axe de rotation YY', l'obturateur 3 porte, à proximité de sa périphérie, deux oreilles 7a, 7b dont les alésages 8a, 8b sont coaxiaux à l'axe YY'.

Conformément à l'invention, la face 9 de chacune des oreilles 7a, 7b tournée vers la paroi du conduit 2 présente une surface sphérique (figure 3) centrée au point C (figures 1 et 2).

De préférence, les deux faces 9 et la zone sphérique de la portée 4 appartiennent à la même sphère S (figure 1) dont le diamètre 2R est sensiblement égal, au jeu de fonctionnement près, au diamètre D du conduit 2 au niveau de l'axe YY'.

L'obturateur 3 est solidaire en rotation d'un arbre de commande 10 dont l'extrémité cannelée est emboîtée dans des cannelures correspondantes pratiquées sur l'alésage 8a (figures 1 et 3).

L'obturateur 3 est en outre rendu solidaire en translation de l'arbre 10 au moyen d'une goupille 11a engagée dans un perçage pratiqué en une seule opération dans l'oreille 7a et l'arbre 10 au cours du montage.

L'arbre 10 traverse un alésage 12 du corps 1 et est terminé à l'opposé de l'oreille 7a, par un carré 13 destiné à recevoir une poignée de commande (non représentée).

L'alésage 12 comprend une surface 12a adjacente au conduit 2 et une surface 12b de plus grand diamètre débouchant à l'extérieur de la vanne et destinée à recevoir un système presse-étoupe 14. Les deux surfaces 12a et 12b sont séparées par un épaulement 12c.

Les deux parties correspondantes 10a et 10b de l'arbre 10 sont séparées par une collerette 10c maintenue contre une rondelle 14a en appui sur l'épaulement 12c, sous l'effet de serrage d'un écrou de presse-étoupe 15 par l'intermédiaire de la garniture d'étanchéité 14.

La collerette 10c coopère avec la goupille 11a pour assurer un excellent positionnement diamétral de l'obturateur 3.

Un arbre de pivotement 16 est engagé dans l'alésage 8b, et positionné dans cet alésage au moyen d'une goupille 11b montée de façon analogue à la goupille 11a.

Une partie 16a de l'arbre 16 est engagée rotativement dans un alésage 17 pratiqué dans le corps 1 à l'opposé de l'alésage 12 et fermé par un capuchon étanche 18.

Les parties 10a et 16a des arbres 10 et 16 sont recouvertes d'au moins une couche 19 de résine polyflurée antifriction telle que le polytétra-fluoréthylène ou le fluoréthylène propylène et sont ainsi guidées en rotation avec autolubrification par la surface 12a de l'alésage 12 et par l'alésage 17, par l'intermédiaire de cette couche 19.

Sous cette couche 19, les parties 10a, 16a ont été surfacées par un opération de galetage.

L'alésage 17 et la partie 12a de l'alésage 12 ont également été surfacées par une opération de galetage.

Le jeu existant entre l'arbre 10 et la surface 12a, ainsi qu'entre l'arbre 16 et l'alésage 17 est ainsi très faible, compris dans la pratique entre 0,01 et 0,03 millimètres par exemple.

La vanne-papillon ainsi réalisée est particulièrement résistante à l'usure. En effet, le jeu entre la face 9 des oreilles 7a, 7b et la paroi du conduit 2 étant très faible, les arbres 10, 16 sont peu sollicités, notamment en flexion, de sorte que leur maintien dans les alésages 12, 17 reste précis après une longue utilisation, et qu'ils fléchissent peu. Ainsi, le couple nécessaire pour la manoeuvre de la vanne est réduit.

Le positionnement de l'obturateur 3 par rapport au siège 5 est précis, ce qui assure une bonne longévité de ce siège 5 et autorise une fermeture étanche.

Comme la face 9 des oreilles 7a, 7b appartient à la même sphère que la portée 4, les oreilles 7a, 7b ne risquent pas de heurter le siège 5 au cours de la rotation de l'obturateur 3.

Tous ces avantages sont renforcés par le montage des parties 10a et 16a des arbres 10, 16 dont le jeu diamétral est particulièrement faible.

L'utilisation de résine polyfluorée autour de ces arbres assure une première étanchéité permettant l'emploi d'un presse-étoupe 14 de dimension réduite.

Ainsi, la face 9 des oreilles 7a et 7b étant très proche de la paroi interne du conduit 2, les contraintes de flexion dans l'arbre de commande 10 et dans l'arbre de pivotement 16 sont pratiquement éliminées et ces arbres 10 et 16 sont sollicités seulement en cisaillement de sorte que les frottements apparaissant au cours de la rotation de ces arbres sont très réduits. Grâce aux parties 10a et 16a des arbres 10 et 16 qui sont relativement hautes et montées sensiblement sans jeu dans les alésages 12 et 17, ces bons résultats sont encore améliorés. Ainsi la couche de résine polyfluorée 19 qui recouvre les parties 10a et 16a est peu sollicitée et jouit d'une bonne longévité, et diminue encore elle-même les frottements engendrés au cours de la rotation de l'obturateur. La vanne ainsi constituée offre donc une caractéristique de couple très avantageuse qui assure un fonctionnement commode, doux et agréable si la vanne est actionnée manuellement et qui est très favorable à l'installation d'une télécommande.

Ce montage des parties 10a, 16a des arbres 10, 16 est particulièrement avantageux quand le corps de la vanne-papillon est réalisé notamment en acier inoxydable. Si ce corps est en acier ordinaire, on préfère utiliser une variante de l'invention dans laquelle la surface 12a de l'alésage 12, et l'alésage 17 sont chemisés par des bagues 20 (représentées en pointillés sur la figure 2) recouvertes sur leur surface intérieur d'au moins une couche de résine polyfluorée antifriction.

Les parties 10a et 16a des arbres correspondants sont alors simplement surfacées par une opération de galetage, mais ne portent pas de résine polyfluorée.

Ce montage présente les mêmes avantages que le précédent. Bien entendu l'invention n'est pas limitée aux exemples qui viennent d'être décrits.

C'est ainsi qui, tout en restant sur l'axe YY', le centre des surfaces sphériques des faces 9 peut être distinct du point C, et notament être situé entre le point C et la face 9 considérée.

Les faces bombées 9 peuvent avoir une forme autre que sphérique.

On peut également prévoir que ce sont les surfaces 12a et 17a des alésages 12 et 17 qui portent la couche de résine polyfluorée antifriction.

**Revendications**

1. Vanne papillon comprenant un corps (1) traversé par un conduit (2) destiné à venir en regard de deux parties de la tuyauterie, et un disque obturateur (3)—ou papillon—monté rotativement dans le corps (1) selon un axe de rotation (YY') qui coupe perpendiculairement l'axe (XX') du conduit (2), cet obturateur (3) comprenant en outre, sur sa face tournée vers l'axe de rotation (YY'), au moins une oreille (7a) qui est traversée par un alésage (8a) coaxial à l'axe de rotation (YY') et occupé par un arbre (10) assurant la rotation de l'obturateur (3) et présente vers la paroi du conduit une surface sphérique de diamètre voisin de celui du conduit et centrée à l'intersection (C) entre l'axe de rotation (YY') de l'obturateur (3) et l'axe (XX') du conduit (2), caractérisée en ce que le disque obturateur (3) est déporté parallèlement par rapport à son axe de rotation (YY') et comporte à sa périphérie une portée annulaire (4) destinée à prendre appui sur un siège (5) faisant saillie dans le conduit (2) qui est sensiblement cylindrique.

2. Vanne-papillon conforme à la revendication 1 dans laquelle la portée annulaire (4) de l'obturateur (3) est une zone sphérique centrée sur son axe de rotation (YY'), caractérisé en ce que les surfaces sphériques de la portée (4) de l'obturateur (3) et de l'oreille (7a) appartiennent à une même sphère (S).

3. Vanne conforme à l'une des revendications 1 ou 2 dans laquelle l'un au moins des arbres (10, 16) est monté rotativement dans un alésage (12, 17) du corps (1) de la vanne, caractérisé en ce que la surface (10a, 16a) de cet arbre (10, 16) qui est engagée dans la surface (12a, 17a) de l'alésage adjacent au conduit (2) est recouverte d'au moins une couche de résine polyfluorée antifriction.

4. Vanne conforme à la revendication 3, caractérisée en ce que l'arbre (10, 16) est surfacé par une opération de galetage préalablement à la mise en place de résine polyfluorée.

5. Vanne conforme à l'une des revendications 3 ou 4, caractérisée en ce que la partie de l'alésage (12a, 17a) du corps (1) traversée par l'arbre (10a, 16a) recouvert de résine polyfluorée est surfacée par une opération de galetage.

6. Vanne conforme à l'une des revendications 1 ou 2, dans laquelle l'un au moins des arbres (10, 16) est monté rotativement dans un alésage (12, 17) du corps (1) de la vanne, caractérisée en ce qu'une douille (20), dont la surface intérieure est recouverte de résine polyfluorée, est engagée dans la partie de l'alésage (12a, 17a) adjacent au conduit (2), la partie correspondante de l'arbre (10a, 16a) étant surfacée par une opération de galetage.

7. Vanne conforme à l'une des revendications 1 à 6, caractérisée en ce que l'arbre (10) et l'oreille (7a) de l'obturateur (3) présentent des surfaces cannelées montées à emboîtement qui les rendent solidaires.

**Patentansprüche**

1. Klappenventil mit einem Körper, der von einer Leitung (2) durchquert wird, welche dazu bestimmt ist, in Gegenüberstellung zu zwei Teilen der Rohrleitung zu gelangen, und mit einer Verschlußscheibe (3) bzw. -klappe, die drehbar in dem Körper (1) um eine Drehachse (YY') montiert ist, welche die Achse (XX') der Leitung (2) senkrecht schneidet, wobei dieses Verschlußglied (3) ferner auf seiner der Drehachse (YY') zugekehrten Fläche wenigstens einen Ansatz (7a) aufweist, der von einer Bohrung (8a) durchquert wird, welche koaxial mit der Drehachse (YY') ist und von einer die Drehbewegung des Verschlussgliedes (3) gewährleistenden Welle (10) eingenommen wird, und zur Wandung der Leitung hin eine sphärische Oberfläche aufweist, deren Durchmesser ungefähr gleich dem der Leitung ist und auf den Schnittpunkt (C) zwischen der Drehachse (YY') des Verschlußgliedes (3) und der Achse (XX') der Leitung (2) zentriert ist, dadurch gekennzeichnet, daß die Verschlußscheibe (3) parallel gegen ihre Drehachse (YY') versetzt ist und an ihrem Umfang eine ringförmige Auflage (4) aufweist, die dazu bestimmt ist, sich auf einem Sitz (5) zu stützen, der in der Leitung (2) herausragt, welche im wesentlichen zylindrisch ist.

2. Klappenventil nach Anspruch 1, bei welchem die ringförmige Auflage (4) des Verschlußgliedes (3) eine sphärische Zone ist, die auf seine Drehachse (YY') zentriert ist, dadurch gekennzeichnet, daß die sphärischen Oberflächen der Auflage (4) des Verschlußgliedes (3) und des Ansatzes (7a) zu derselben Kugel (S) gehören.

3. Ventil nach Anspruch 1 oder 2, bei welchem wenigstens eine der Wellen (10, 16) drehbar in einer Bohrung (12, 17) des Ventilkörpers (1) gelagert ist, dadurch gekennzeichnet, daß die in die an die Leitung (2) angrenzende Oberfläche (12a, 17a) der Bohrung eingesetzte Oberfläche (10a, 16a) dieser Welle (10, 16), mit wenigstens einer reibungsvermindernden Schicht aus polyfluoriertem Harz bedeckt ist.

4. Ventil nach Anspruch 3, dadurch gekennzeichnet, daß die Welle (10, 16) vor dem Aufbringen des polyfluorierten Harzes einer Oberflächenbehandlung durch Glattwalzen unterzogen worden ist.

5. Ventil nach Anspruch 3 oder 4, dadurch gekennzeichnet, daß derjenige Teil der Bohrung (12a, 17a) des Körpers (1), welcher von der mit polyfluoriertem Harz bedeckten Welle (10a, 16a) durchquert wird durch Glattwalzen oberflächenbehandelt ist.

6. Ventil nach Anspruch 1 oder 2, bei welchem wenigstens eine der Wellen (10, 16) drehbar in einer Bohrung (12, 17) des Ventilkörpers (1) gelagert ist, dadurch gekennzeichnet, daß eine Buchse (20), deren Innenoberfläche mit polyfluoriertem Harz beschichtet ist, in den an die Leitung (2) angrenzenden Teil der Bohrung (12a, 17a) eingesetzt ist, wobei der entsprechende Teil der Welle (10a, 16a) durch Glattwalzen oberflächenbehandelt ist.

7. Ventil nach einem der Ansprüche 1 bis 6, dadurch gekennzeichnet, daß die Welle (10) und der Ansatz (7a) des Verschlußgliedes (3) geriffelte Oberflächen aufweisen, die zur festen Verbindung miteinander ineinander eingesetzt sind.

**Claims**

1. A butterfly valve comprising a body (1) through which extends a conduit (2) adapted to come into register with two parts of the pipeline, and a closure disc (3)—or butterfly—mounted rotatably in the body (1) along an axis of rotation (YY') which perpendicularly intersects the axis (XX') of the conduit (2), the closure member (3) also comprising, on its surface facing the axis of rotation (YY'), at least one lug (7a) through which extends a bore (8a) coaxial with the axis of rotation (YY) and occupied by a shaft (10) which provides for rotation of the closure member (3), said lug having towards the wall of the conduit a spherical surface of a diameter close to that of the conduit and centred at the intersection (C) between the axis of rotation (YY') of the closure member (3) and the axis (XX') of the conduit (2), characterised in that the closure disc (3) is offset parallel to its axis of rotation (YY') and has at its periphery an annular engagement surface (4) adapted to bear on a seat (5) projecting in the conduit (2) which is substantially cylindrical.

2. A butterfly valve according to claim 1, in which the annular engagement surface (4) on the closure member (3) is a spherical zone centred on its axis of rotation (YY'), characterised in that the spherical surfaces of the engagement surface (4) on the closure member (3) and of the lug (7a) belong to the same sphere (S).

3. A valve according to claim 1 or 2, in which at least one of the shafts (10, 16) is mounted rotatably in a bore (12, 17) in the body (1) of the valve, characterised in that the surface (10a, 16a) of said shaft (10, 16) which is engaged in the surface (12a, 17a) of the bore adjacent to the conduit (2) is covered by at least one layer of anti-friction polyfluorinated resin.

4. A valve according to claim 3, characterised in that the shaft (10, 16) is surfaced by a roller-burnishing operation prior to the application of the polyfluorinated resin.

5. A valve according to claim 3 or 4, characterised in that the portion of the bore (12a, 17a) of the body (1) through which the shaft (10a, 16a) covered with polyfluorinated resin extends is surfaced by a roller-burnishing operation.

6. A valve according to claim 1 or 2, in which at least one of the shafts (10, 16) is mounted rotatably in a bore (12, 17) in the body (1) of the valve, characterised in that a bush (20), the interior surface of which is covered with polyfluorinated resin, is engaged in the portion of the bore (12a, 17a) adjacent to the conduit (2), the corresponding portion of the shaft (10a, 16a) being surfaced by a roller-burnishing operation.

7. A valve according to any one of claims 1 to 6, characterised in that the shaft (10) and the lug (7a) of the closure member (3) have fluted surfaces fitting one inside the other so that they are rigidly connected.

FIG_1

FIG_3

1

FIG_2